# EUROPEAN PATENT APPLICATION

(11) **EP 4 290 673 A1**
(43) Date of publication of application: **13.12.2023**
(21) Application number: 21924974.5
(22) Date of filing: 25.11.2021
(51) Int. Cl.: H01M 50/531, H01M 50/528, H01M 10/04, H01M 10/0587

(54) **SECONDARY BATTERY**

(30) Priority: 03.02.2021 KR 20210015529
(71) Applicant: Samsung SDI Co., Ltd., Yongin-si, Gyeonggi-do 17084 (KR)
(72) Inventor: SHIN, Joo Youn, Yongin-si, Gyeonggi-do 17084 (KR); PARK, Jung Hyun, Yongin-si, Gyeonggi-do 17084 (KR); SHIN, Ye Eun, Yongin-si, Gyeonggi-do 17084 (KR); YU, Gwan Hyeon, Yongin-si, Gyeonggi-do 17084 (KR)
(74) Representative: Marks & Clerk LLP
(86) International application number: PCT/KR2021/017506
(87) International publication number: WO 2022/169078

(57) **Abstract**

The present invention relates to a secondary battery having improved output and safety. In one embodiment, disclosed is a secondary battery comprising: an electrode assembly comprising a first electrode, a second electrode and a separator; a case for accommodating the electrode assembly; and a cap assembly coupled to the upper part of the case, wherein the first electrode comprises a first current collector, a first active material layer in which the first active material layer is applied onto the first current collector, a first uncoated area on which a first active material is not applied, and a first electrode tab electrically connected to the first current collector, and the first electrode tab comprises a current collection tab, which is a part of the first current collector, and a lead tab attached to the first current collector.

## Description

### TECHNICAL FIELD

The present invention relates to a secondary battery.

### BACKGROUND ART

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. These lithium ion secondary batteries may be classified into cylindrical, prismatic, and pouch-type secondary batteries in terms of shape.

Specifically, a cylindrical lithium secondary battery generally includes a cylindrical electrode assembly, a cylindrical case to which the electrode assembly is coupled, an electrolyte injected into the case to allow movement of lithium ions, and a cap assembly that is coupled to one side of the case to prevent leakage of the electrolyte solution and prevents separation of the electrode assembly.

The above information disclosed in this Background section is only for enhancement of understanding of the background of the invention and therefore it may contain information that does not constitute prior art. Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. These lithium ion secondary batteries may be classified into cylindrical, prismatic, and pouch-type secondary batteries in terms of shape.

Specifically, a cylindrical lithium secondary battery generally includes a cylindrical electrode assembly, a cylindrical case to which the electrode assembly is coupled, an electrolyte injected into the case to allow movement of lithium ions, and a cap assembly that is coupled to one side of the case to prevent leakage of the electrolyte solution and prevents separation of the electrode assembly.

The above information disclosed in this Background section is only for enhancement of understanding of the background of the invention and therefore it may contain information that does not constitute prior art.

### DESCRIPTION OF EMBODIMENTS

### TECHNICAL PROBLEM

The present invention provides a secondary battery having improved output and safety.

### SOLUTION TO PROBLEM

A secondary battery according to an aspect of the present invention may include: an electrode assembly comprising a first electrode, a second electrode and a separator; a case for accommodating the electrode assembly; and a cap assembly coupled to the upper part of the case, wherein the first electrode comprises a first current collector, a first active material layer in which the first active material layer is coated onto the first current collector, a first uncoated area on which a first active material is not coated, and a first electrode tab electrically connected to the first current collector, and the first electrode tab comprises a current collection tab, which is a part of the first current collector, and a lead tab attached to the first current collector.

The lead tab may be located at the center of one surface of the first current collector.

The current collection tab may consist of a plurality of current collection tabs.

The lead tab may be welded to the first uncoated area.

The lead tab may be located at one end in a first direction, which is a longitudinal direction of the first current collector.

The lead tab may consist of a plurality of lead tabs.

The first electrode tab may be electrically connected to a sub plate of the cap assembly.

The second electrode may include a second current collector, a second active material layer coated with a second active material layer on the second current collector, and a second electrode tab electrically connected to the second current collector.

The second electrode tab may be a part of the second current collector.

The second electrode tab may consist of a plurality of second electrode tabs.

### ADVANTAGEOUS EFFECTS OF INVENTION

In the secondary battery according to an embodiment of the present invention, by including an electrode tab including a current collection tab, which is a part of the current collector, and a lead tab attached to the uncoated area, safety can be improved by stably supporting the cap assembly, and at the same time, output can be increased.

### BRIEF DESCRIPTION OF DRAWINGS

FIG. 1 is a perspective view illustrating a secondary battery according to an embodiment of the present invention.
FIG. 2 is a cross-sectional view of a secondary battery according to an embodiment of the present invention.
FIG. 3 is an exploded perspective view illustrating an electrode assembly according to an embodiment of the present invention.
FIG. 4 is a plan view illustrating first and second electrodes of FIG. 3.
FIG. 5 is a perspective view illustrating a state in which the electrode assembly of FIG. 3 is wound.
FIG. 6 is a plan view illustrating a first electrode according to another embodiment of the present invention.
FIG. 7 is a plan view illustrating a first electrode according to another embodiment of the present invention.

### BEST MODE

Hereinafter, a preferred embodiment of the present invention will be described in detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

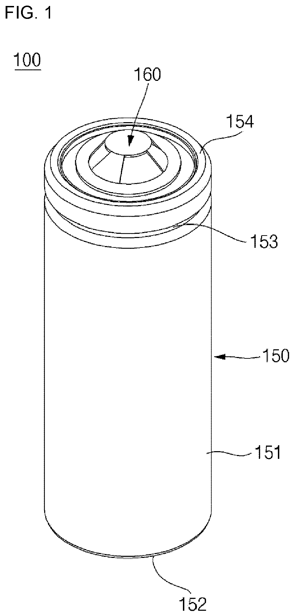

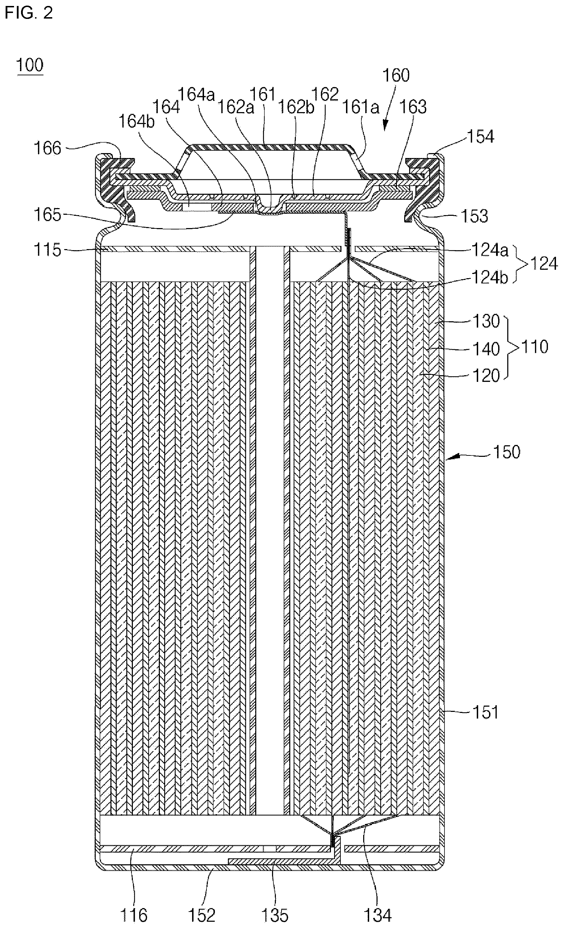

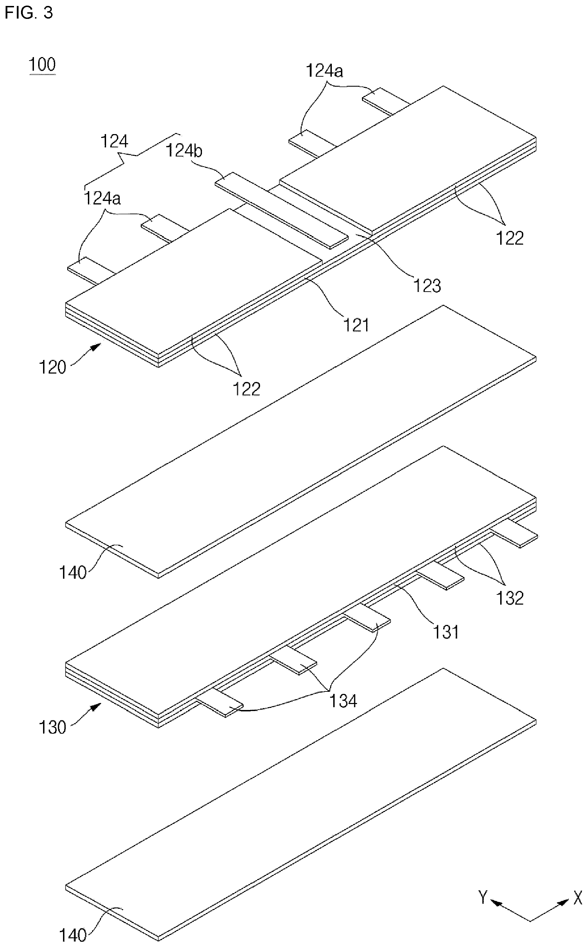

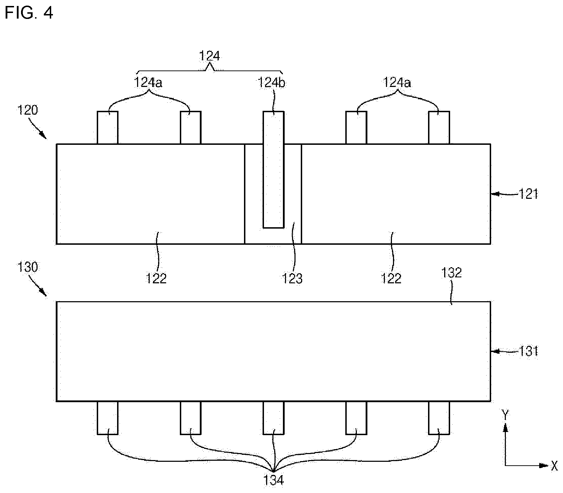

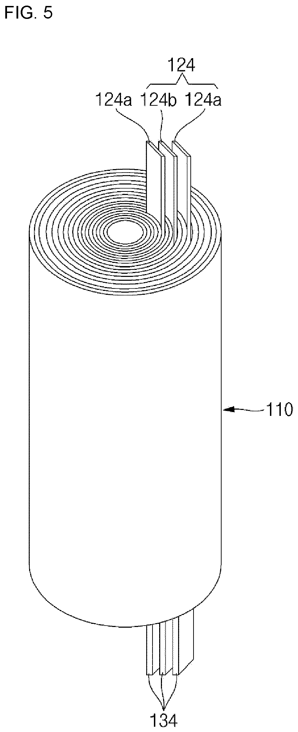

FIG. 1 is a perspective view illustrating a secondary battery according to an embodiment of the present invention. FIG. 2 is a cross-sectional view of a secondary battery according to an embodiment of the present invention. FIG. 3 is an exploded perspective view illustrating an electrode assembly according to an embodiment of the present invention. FIG. 4 is a plan view illustrating first and second electrodes of FIG. 3. FIG. 5 is a perspective view illustrating a state in which the electrode assembly of FIG. 3 is wound.

Referring to FIGS. 1 and 2, a secondary battery 100 according to an embodiment of the present invention includes an electrode assembly 110, a case 150, and a cap assembly 160.

The electrode assembly 110 includes a first electrode 120, a second electrode 130, and a separator 140 interposed between the first electrode 120 and the second electrode 130. In the electrode assembly 110, a laminate of the first electrode 120, the second electrode 130, and the separator 140 may be wound in a jelly-roll shape. Here, the first electrode 120 may function as a positive electrode, and the second electrode 130 may function as a negative electrode. Of course, the reverse is also possible.

The first electrode 120 includes a first current collector 121 made of a metal foil such as aluminium foil, a first active material layer 122 formed on both surfaces of the first current collector 121 and coated with a first active material, and a first uncoated area 123 not coated with the first active material. In addition, the first electrode 120 may include a first electrode tab 124 electrically connected to the first current collector 121.

The first active material layer 122 may be formed on both surfaces of the first current collector 121. In some examples, the first active material layer 122 may be continuously formed or discontinuously formed on one surface of the first current collector 121. The first uncoated area 123 may be formed on one surface of the first current collector 121. In addition, the first uncoated area 123 may be a part of the first current collector 121. Referring to FIGS. 3 and 4, the first uncoated area 123 may be located at the center of one surface of the first current collector 121. The first active material layer 122 may be located on both sides of the first uncoated area 123.

The first electrode tab 124 may include a current collection tab 124a and a lead tab 124b. The current collection tab 124a may protrude in a second direction Y perpendicular to a first direction X (or longitudinal direction) of the first current collector 121. The current collection tab 124a may consist of a plurality of tabs spaced apart from each other. Referring to FIG. 5, when the electrode assembly 110 is formed by winding the first electrode 120, the second electrode 130, and the separator 140, the current collection tabs 124a may be aligned at the same position to form a multi-tab structure. The current collection tabs 124a of the multi-tab structure may increase the output of the electrode assembly 110 and minimize resistance. In some examples, the current collection tab 124a may be formed by punching (or cutting) one end of the first current collector 121 in the second direction Y at regular intervals. In addition, the current collection tab 124a may be a part of the first current collector 121. In other words, the current collection tab 124a may be a portion extending from the first current collector 121. In some examples, the current collection tab 124a may also be referred to as the first uncoated area 123.

The lead tab 124b may be attached to the first uncoated area 123. In some examples, the lead tab 124b may be electrically connected to the first uncoated area 123 by welding. The lead tab 124b may be attached to the first uncoated area 123 and may protrude outside the first uncoated area 123. The lead tab 124b may extend in the second direction Y of the first current collector 121 and serve to support the electrode assembly 110. In some examples, the lead tab 124b may support the weight of the cap assembly 160 to improve safety of the secondary battery 100. In addition, the longer the length of the lead tab 124b on the first uncoated area 123, the more stably the electrode assembly 110 can be supported. For example, one end of the lead tab 124b may protrude from one end of the first uncoated area 123, and the other end of the lead tab 124b may be positioned on the same line as the other end of the first uncoated area 123. When the electrode assembly 110 is formed by winding the first electrode 120, the second electrode 130, and the separator 140, the lead tab 124b may be aligned at the same position as the current collection tab 124a. In addition, the current collection tab 124a and the lead tab 124b may be electrically connected to each other by welding, to form the first electrode tab 124. The first electrode tab 124 may protrude upward from the electrode assembly 110 and be electrically connected to the cap assembly 160.

The second electrode 130 may include a second current collector 131 formed of a metal foil, such as copper or nickel, a second active material layer 132 formed on both surfaces of the second current collector 131 and coated with a second active material, and a second electrode tab 134 electrically connected to the second current collector 131.

The second active material layer 132 may be formed on both surfaces of the second current collector 131. In some examples, the second active material layer 132 may be continuously formed on both surfaces of the second current collector 131.

The second electrode tab 134 may protrude in the second direction (Y) of the second current collector 131. The second electrode tab 134 may protrude in a direction opposite to that of the first electrode tab 124. In other words, the second electrode tab 134 may protrude downward from the electrode assembly 110. The second electrode tab 134 may be shaped to correspond to the current collection tab 124a of the first electrode tab 124. For example, the second electrode tab 134 may include a plurality of second electrode tabs spaced apart from each other. When the electrode assembly 110 is formed by winding the first electrode 120, the second electrode 130, and the separator 140, the second electrode tabs 134 may be aligned at the same position to form a multi-tab structure. In some examples, the second electrode tab 134 may be formed by punching (or cutting) one end of the second current collector 131 in the second direction Y at regular intervals. The second electrode tab 134 may be a part of the second current collector 131. In some examples, the second electrode tab 134 may be referred to as a second uncoated portion of the second current collector 131 where the second active material is not formed. The second electrode tab 134 may be electrically connected to a lower plate 152 of the case 150 through an auxiliary tab 135. In some examples, the plurality of second electrode tabs 134 and the auxiliary tab 135 may be electrically connected to each other by welding.

The separator 140 is positioned between the first electrode 120 and the second electrode 130 to prevent a short circuit between the first electrode 120 and the second electrode 130 and to enable the movement of lithium ions. The separator 140 may be made of polyethylene, polypropylene, or a composite film of polyethylene and polypropylene.

The electrode assembly 110 is accommodated inside the case 110 together with an electrolyte. Here, the electrolyte is an organic liquid containing a salt so as to allow lithium ions to move between the first electrode 120 and the second electrode 130 constituting the electrode assembly 120, and may include a non-aqueous organic electrolyte solution that is a mixture of a lithium salt, such as LiPF₆, LiBF₄, LiClO₄, etc., and a high-purity organic solvent, but is not limited thereto in the present invention.

In addition, a first insulating plate 115 is interposed between the electrode assembly 110 and the cap assembly 160, and a second insulating plate 116 is interposed between the electrode assembly 110 and the lower plate 152 of the case 150. The first insulating plate 115 may serve to prevent the electrode assembly 110 from electrically contacting the cap assembly 160. In particular, the first insulating plate 115 may prevent the second electrode 130 of the electrode assembly 110 from electrically contacting the cap assembly 160. A hole through which the first electrode tab 124 passes and a hole through which the electrolyte or internal gas moves may be formed in the first insulating plate 115.

The second insulating plate 116 may serve to prevent the electrode assembly 110 from electrically contacting the lower plate 152 of the case 150. In particular, the second insulating plate 116 may prevent the first electrode 120 of the electrode assembly 110 from electrically contacting the lower plate 152 of the case 150. A hole through which the second electrode tab 134 passes and a hole through which internal gas moves may be formed in the second insulating plate 116.

The case 150 may include a side plate 151 which is a cylindrical body having a certain diameter so as to form a space in which the electrode assembly 110 is accommodated, and a lower plate 152 sealing the lower part of the side plate 151. In some examples, the case 150 may be referred to as a cylindrical case or a cylindrical can. A top opening of the case 150 is opened so as to be sealed after the electrode assembly 110 is inserted. In addition, a beading part 153 may be formed on an upper portion of the case 150 to prevent movement of the electrode assembly 110. In addition, a crimping part 154 for fixing the cap assembly 160 may be formed at an uppermost end of the case 150.

The cap assembly 160 is positioned above the electrode assembly 110 and is coupled to the top opening of the case 150 to seal the case 150. The cap assembly 160 includes a cap up 161, a safety vent 162, an insulator 163, a cap down 164, a sub plate 165, and a gasket 166.

The cap up 161 has a top portion convexly formed to be electrically connected to an external circuit. In addition, the cap up 161 has a discharge hole 161a formed to provide a path through which gas generated from the inside of the case 150 can be discharged. The cap up 161 is electrically connected to the electrode assembly 110 and transfers current generated in the electrode assembly 110 to an external circuit.

The safety vent 162 is formed as a circular plate body corresponding to the cap up 161. A protrusion part 162a that protrudes downward is formed at the center of the safety vent 162. The protrusion part 162a may pass through a through hole 164a of the cap down 164 and be electrically connected to the sub plate 165. In addition, a notch 162b for guiding breaking of the safety vent 162 is formed on the outer periphery of the protrusion part 162a.

The outer periphery of the safety vent 162 is installed in close contact with the rest of the cap up 161, except for an upwardly protruding portion. That is, the outer periphery of the safety vent 162 and the outer periphery of the cap up 161 are in contact with each other. In addition, the edge of the safety vent 162 surrounds the cap up 161 and upwardly extends to from the cap up 161. The safety vent 162 discharges internal gas while blocking current when an abnormal internal pressure is generated inside the case 150. When the internal pressure of the case 150 exceeds the operating pressure of the safety vent 162, the safety vent 162 is electrically separated from the sub plate 165 while the protrusion part 162a rises upward by the internal gas. In addition, when the internal pressure of the case 150 exceeds a breaking pressure higher than the operating pressure of the safety vent 162, the notch 162b of the safety vent 162 is broken, thereby preventing the secondary battery 100 from exploding.

The insulator 163 is interposed between the safety vent 162 and the cap down 164 to insulate the safety vent 162 and the cap down 164 from each other. Specifically, the insulator 163 is interposed between the outer periphery of the front vent 162 and the outer periphery of the cap down 164. The insulator 163 may be made of a resin material, such as polyethylene (PE), polypropylene (PP), or polyethylene terephthalate (PET).

The cap down 164 is formed as a circular plate body. A through hole 164a is formed in the center of the cap down 164, and the protrusion part 162a of the safety vent 162 passes through the through hole 164a. In addition, a discharge hole 164b is formed at one side of the cap down 164, and the sub plate 165 is coupled to a lower part of the cap down 164. The discharge hole 164b may discharge internal gas.

The sub plate 165 is welded between the protrusion part 162a of the safety vent 162 and the first electrode tab 124. Accordingly, the sub plate 165 electrically connects the first electrode tab 124 and the safety vent 162.

The gasket 166 is installed in the top opening of the case 150. That is, the gasket 166 is assembled in close contact between the outer periphery of the cap up 161 and the safety vent 162 and the upper opening of the case 150. The gasket 166 may be made of a resin material such as polyethylene (PE), polypropylene (PP), or polyethylene terephthalate (PET). The gasket 166 may prevent the cap assembly 160 from being separated from the case 150.

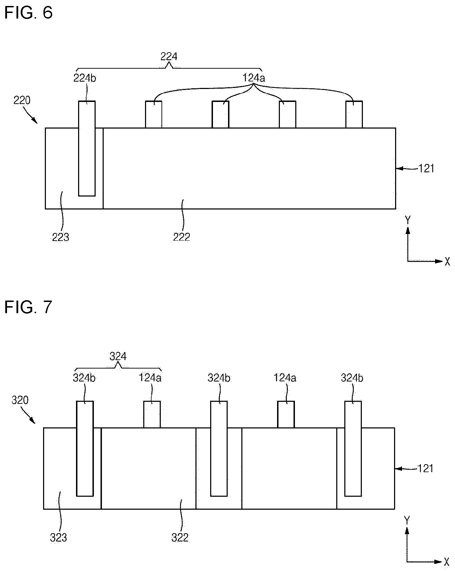

FIG. 6 is a plan view illustrating a first electrode according to another embodiment of the present invention.

Referring to FIG. 6, a first electrode 220 may include a first current collector 121, a first active material layer 222, a first uncoated area 223, and a first electrode tab 224. The first electrode tab 224 may include a current collection tab 124a and a lead tab 224b. The lead tab 224b may be positioned at one end of the first current collector 121. Specifically, the lead tab 224b may be positioned at one end of the first current collector 121 in a first direction (X). In addition, the first uncoated area 223 to which the lead tab 224b is attached may also be located at one end of the first current collector 121 in the first direction X. Accordingly, the first active material layer 222 may be continuously formed on both surfaces of the first current collector 121.

FIG. 7 is a plan view illustrating a first electrode according to another embodiment of the present invention.

Referring to FIG. 7, a first electrode 320 may include a first current collector 121, a first active material layer 322, a first uncoated area 323, and a first electrode tab 324. The first electrode tab 324 may include a current collection tab 124a and a lead tab 324b. A plurality of lead tabs 324b may be attached to one surface of the first current collector 121. When forming the electrode assembly 110, the plurality of lead tabs 324b may be spaced apart so as to be aligned in the same position. In addition, although FIG. 7 shows that the plurality of lead tabs 324b are positioned on one side of the first current collector 121, the plurality of lead tabs 324b may be positioned on both sides of the first current collector 121. For example, one lead tab 324b may be attached to one surface of the first current collector 121, and two lead tabs 324b may be attached to the opposite surface thereof. In addition, a plurality of first uncoated areas 323 to which the lead tabs 324b are attached may be formed on one side or both sides of the first current collector 121. The first active material layer 322 may be formed discontinuously or intermittently on the first current collector 121.

While the foregoing embodiment has been provided for carrying out the secondary battery according to the present invention, it should be understood that the embodiment described herein should be considered in a descriptive sense only and not for purposes of limitation, and various changes in form and details may be made therein without departing from the spirit and scope of the invention as defined by the following claims.

## Claims

1. A secondary battery comprising:
an electrode assembly comprising a first electrode, a second electrode and a separator;
a case for accommodating the electrode assembly; and
a cap assembly coupled to the upper part of the case,
wherein the first electrode comprises a first current collector, a first active material layer in which the first active material layer is coated onto the first current collector, a first uncoated area on which a first active material is not coated, and a first electrode tab electrically connected to the first current collector, and the first electrode tab comprises a current collection tab, which is a part of the first current collector, and a lead tab attached to the first current collector.

2. The secondary battery of claim 1, wherein the lead tab is located at the center of one surface of the first current collector.

3. The secondary battery of claim 1, wherein the current collection tab consists of a plurality of current collection tabs.

4. The secondary battery of claim 1, wherein the lead tab is welded to the first uncoated area.

5. The secondary battery of claim 1, wherein the lead tab is located at one end in a first direction, which is a longitudinal direction of the first current collector.

6. The secondary battery of claim 1, wherein the lead tab consists of a plurality of lead tabs.

7. The secondary battery of claim 1, wherein the first electrode tab is electrically connected to a sub plate of the cap assembly.

8. The secondary battery of claim 1, wherein the second electrode includes a second current collector, a second active material layer coated with a second active material layer on the second current collector, and a second electrode tab electrically connected to the second current collector.

9. The secondary battery of claim 8, wherein the second electrode tab is a part of the second current collector.

10. The secondary battery of claim 8, wherein the second electrode tab consists of a plurality of second electrode tabs.
